# EUROPÄISCHE PATENTSCHRIFT

(11) **EP 1 544 931 B1**
(45) Veröffentlichungstag und Bekanntmachung des Hinweises auf die Patenterteilung: **17.03.2010**
(21) Anmeldenummer: 03029078.7
(22) Anmeldetag: 17.12.2003
(51) Int. Cl.: H01M 8/02

(54) **Stromabnehmer für Brennstoffzellenstacks**
Current collector for fuel cell stacks
Collecteur de courant pour des empilements de piles à combustible

(43) Veröffentlichungstag der Anmeldung: 22.06.2005
(73) Patentinhaber: SFC Smart Fuel AG, 85649 Brunnthal-Nord (DE)
(72) Erfinder: Rothkopf, Kurt, 81539 München (DE)
(74) Vertreter: Grünecker, Kinkeldey, Stockmair & Schwanhäusser Anwaltssozietät

(56) Entgegenhaltungen:
- WO-A-96/37005
- WO-A-2004/013923
- US-A- 3 134 696
- US-B1- 6 395 154
- WIND J ET AL: "Metallic bipolar plates for PEM fuel cells" JOURNAL OF POWER SOURCES, ELSEVIER SEQUOIA S.A. LAUSANNE, CH, Bd. 105, Nr. 2, 20. März 2002 (2002-03-20), Seiten 256-260, XP004376861 ISSN: 0378-7753

## Beschreibung

Die Erfindung betrifft plattenförmige Stromableiter zum Aufbau von Brennstoffzellenstacks, Stackelemente (Stackelement-Kombinationen) mit den erfindungsgemäßen Stromableitern, sowie Verfahren zur Herstellung solcher (kombinierter) Stackelemente.

### Stand der Technik

Eine wesentliche Vorgabe an Brennstoffzellen ist eine möglichst hohe Energieausbeute bei möglichst kleinem Volumen, oder äquivalent, eine möglichst hohe Leistungsdichte. Somit ist ein Aspekt bei der Entwicklung von Brennstoffzellen die Forderung nach einer möglichst kompakten Bauweise. Unter anderem aus diesem Grund rücken monopolare Anordnungen mehr und mehr in den Mittelpunkt des Interesses: bei monopolarer Bauweise, bei der anodische oder kathodische Fluidkammern jeweils paarweise vorliegen, muss keine Trennwand zwischen den paarweise auftretenden Kammern vorgesehen werden. Diese können zu einer einzigen Anodenkammer oder Kathodenkammer integriert werden. Der Wegfall der Trennwand bedeutet eine signifikante Volumenreduzierung gegenüber bipolaren Anordnungen.

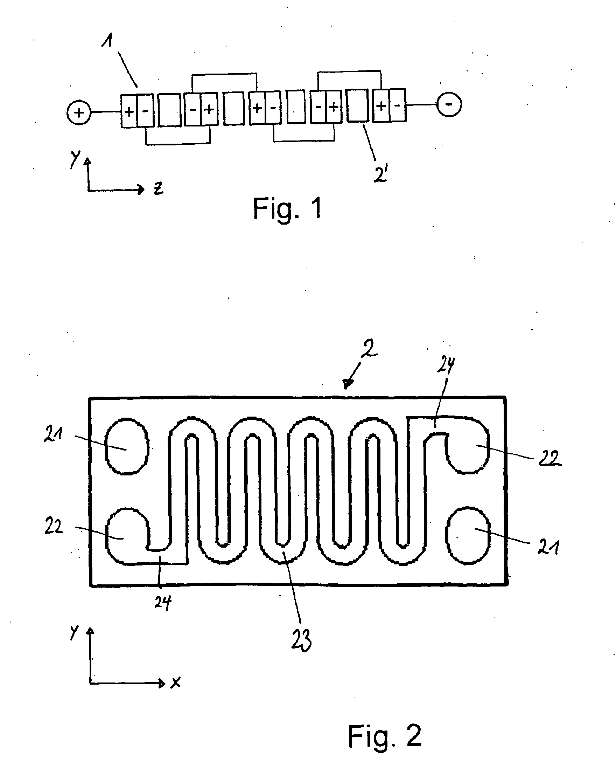

Die wesentlichen Charakteristika einer Monopolaranordnung lassen sich am einfachsten anhand des schematischen Ersatzschaltbildes aufzeigen, das in Fig. 1 skizziert ist. Die Stapelrichtung der Anordnung wird nachfolgend entlang der z-Achse eines kartesischen Koordinatensystems (x,y,z) gelegt. Bei der gezeigten Anordnung sind die Zellen 1 so benachbart, dass sich in Stackrichtung z paarweise jeweils zwei Pluspole oder zwei Minuspole gegenüberliegen. Zu jedem Anodenpaar bzw. Kathodenpaar gehört eine gemeinsame Fluidkammer (Anodenkammer bzw. Kathodenkammer) für Anodenfluide bzw. Kathodenfluide, die in Fig. 1 symbolisch angedeutet und mit dem Bezugszeichen 2' versehen ist. Zu beiden Seiten jeder Anoden- oder Kathodenkammer 2' sind zwei Stromabnehmer (Pole) vorgesehen.

Bei einer Stackanordnung, die durch Stapelung von Plattenelementen entlang der z-Achse erreicht wird, kann durch die gemeinsame Verwendung einer Anodenkammer/Kathodenkammer 2' durch zwei benachbarte Zellen 1 eine deutliche Volumenersparnis gegenüber einer Bipolaranordnung erreicht werden, wo die Anodenkammern 2' und Kathodenkammern 2' jeder Zelle gegenüber denjenigen benachbarter Zellen separiert sein müssen.

Das Kammervolumen, d.h. das der Fluidaufnahme dienende Volumen, für eine solche gemeinsame Anodenkammer 2' oder Kathodenkammer 2' kann im wesentlichen durch ein einziges Plattenelement bereit gestellt werden.

Fig. 2 zeigt eine von den vorliegenden Anmeldern gegenwärtig besonders bevorzugte Ausgestaltung eines solchen Plattenelements, das in der europäischen Patentanmeldung EP 1394877 genauer beschrieben ist.

Dieses Kammer-Plattenelement 2 lässt sich in einen Rahmenbereich und einen Innenbereich unterteilen. Im Rahmen- und im Innenbereich sind Aussparungen 21, 22, 23 vorgesehen. Diese Aussparungen 21, 22, 23 sind Perforationen, an denen das Plattenmaterial entlang der gesamten Dickenrichtung entfernt ist (es handelt sich dabei also nicht lediglich um Vertiefungen im Plattenmaterial). Die Aussparungen 21, 22, 23 können z. B. durch Ausstanzen von Plattenmaterial auf einfache Weise in einem einzigen Arbeitsgang aus unstrukturierten Rohplatten hergestellt werden. Das Kammervolumen ergibt sich im wesentlichen aus dem Produkt der Fläche der Aussparungen 23 im Innenbereich und der Dicke des Kammer-Plattenelements 2.

Bei der bevorzugten Ausgestaltung sind im Rahmenbereich vier Aussparungen (Bohrungen) 21, 22 vorgesehen, die zur Führung von Anoden- bzw. Kathodenfluiden senkrecht zur Plattenebene (xy-Ebene) dienen. Von diesen vier Bohrungen 21, 22 sind zwei diametral gegenüberliegende Bohrungen 22 über Aussparungen mit der Aussparungsstruktur im Innenbereich verbunden: eine Bohrung 22 dient der Zufuhr eines Anoden- oder Kathodenfluids in den durch die Aussparungsstruktur gebildeten mäandernden Kanal, die andere Bohrung 22 der Abfuhr des Fluids aus dem Kammerbereich. Durch die spezielle Ausgestaltung des Kammer-Plattenelements 2 kann es in unterschiedlichen Orientierungen gleichermaßen für Anoden- und Kathodenkammern verwendet werden.

Die Aussparungen 23 im Innenbereich sind so vorgesehen, dass sie eine zusammenhängende Aussparungsstruktur 23 ("Kanal") bilden, die einen möglichst großen Flächenanteil des Innenbereichs mäandernd überzieht. Nachfolgend wird diese zusammenhängende Aussparungsstruktur 23 vereinfachend als Kanal bezeichnet, wobei bedacht werden muss, dass sowohl die Kammern, als auch der Kanal erst im Stack durch beiderseitig vorgesehene Membranen o.a. Plattenelemente seitlich abgeschlossen werden.

Das Kammer-Plattenelement 2, das die Anoden- und Kathodenkammern bildet, muss die zu beiden Seiten zu bildenden Anoden bzw. Kathoden elektrisch gegeneinander isolieren und wird daher bevorzugt aus einem isolierenden Material (z.B. Kunststoff) hergestellt.

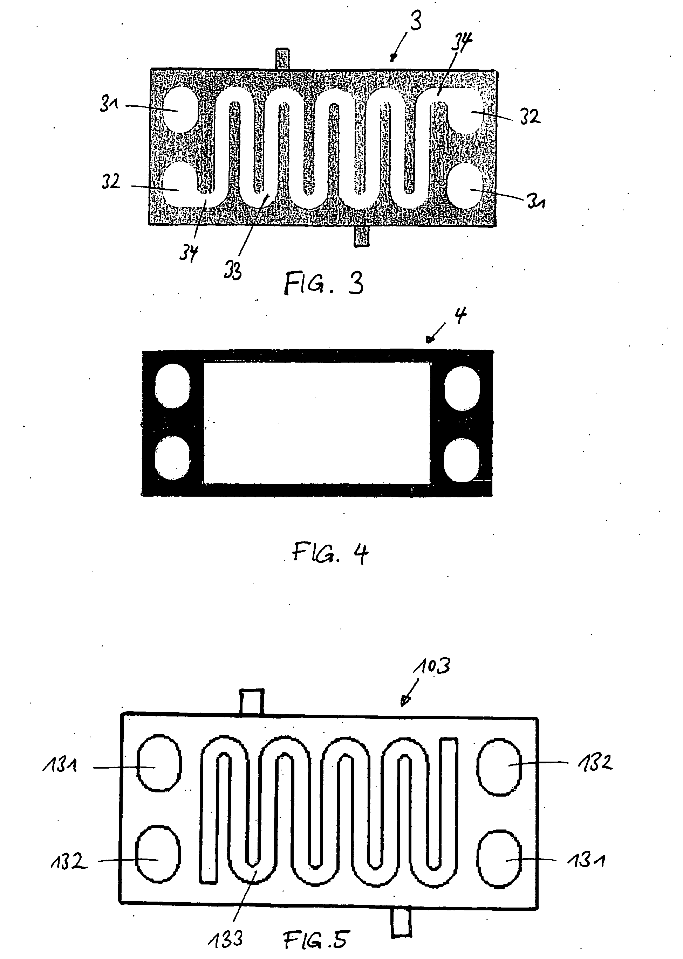

Die beiden Elektroden werden durch beiderseits des isolierenden Kammer-Plattenelements 2 vorgesehene Stromabnehmer kontaktiert, die das Kammer-Plattenelement 2 sandwichartig einbetten. Ein solcher Stromabnehmer 3 ist in Fig. 3 skizziert.

Auf der dem Kammer-Plattenelement 2 abgewandten Seite grenzen die Stromabnehmer 3 an Membranen (z.B. MEAs, von membrane electrode assembly), die die Innenbereiche der Anodenkammern bzw. Kathodenkammern abschließen. Die Stromabnehmer 3 dienen der Stromabfuhr an der Grenzfläche Membran/Stromabnehmer und weisen außen am Rahmenbereich Rippen auf, um benachbarte Zellen 1 zu verschalten. Da die Stromabnehmer 3 die aktive Kontaktfläche des Fluids in den Kammern mit den benachbarten Membranen nicht nennenswert verringern dürfen, werden Stromabnehmer 3 verwendet, deren Aussparungen 31, 32, 33 in Form, Größe und Lage an die Aussparungen 21, 22, 23 der Kammer-Plattenelemente 2 angepasst sind, beispielsweise identisch zu den Aussparungen 21, 22, 23 der Kammer-Plattenelemente 2 ausgebildet sind (vgl. Fig. 2 und 3). Dies erlaubt u.a. die Verwendung ein- und derselben Stanzform zur Herstellung von Kammer-Plattenelementen 2 und Stromabnehmern 3.

Zusammen mit geeigneten Trennwänden können jeweils zwei dieser Kammer-Plattenelemente 2 vorteilhaft auch anstelle von Bipolarplatten zum Aufbau von Bipolarstacks verwendet werden. Die Trennwand kann beispielsweise durch eine dünne Folie zwischen den zwei Kammer-Plattenelementen 2 realisiert werden, so dass die Gesamtdicke der zwei Kammer-Plattenelemente 2 plus Folie geringer sein kann, als die einer einzigen Bipolarplatte.

Das Kammer-Plattenelement 2 ermöglicht, zusammen mit geeigneten weiteren platten- und/oder folienartigen Elementen, eine äußerst kompakte Bauweise von bipolaren und insbesondere monopolaren Brennstoffzellenstacks. Es besteht aber unverändert ein Bedarf, die Leistung pro Stackvolumen (Leistungsdichte) bzw. den Wirkungsgrad von derartigen Brennstoffzellenstacks weiter zu erhöhen.

Das Dokument WO 96/37005 A offenbart ein Plattenelement, in welchem zwar Vertiefungen vorgesehen sind, jedoch keine Aussparungen.

Das Dokument US-B1-6 395 154 offenbart eine Separatoranordnung mit einer Separatorschicht, welche keine Aussparungen aufweist. Weiterhin ist darin ein Stromableiter offenbart, worin in mit einer Aussparungsstruktur zusammenhängende Öffnungen Dichtungen aus Elastomermaterial eingesetzt werden, um Fluidkanäle auszubilden.

### Beschreibung der Erfindung

Daher ist es eine Aufgabe der vorliegenden Erfindung, die Leistungsdichte von Brennstoffzellenstacks, die aus den oben beschriebenen Kammer-Plattenelementen 2 aufgebaut sind, weiter zu verbessern.

Diese Aufgabe wird durch das erfindungsgemäße Stackelement mit den Merkmalen des Anspruchs 1, sowie durch das in Anspruch 8 angegebene Verfahren zur Herstellung des erfindungsgemäßen Stackelements gelöst.

Vorteilhafte Weiterbildungen sind in den Unteransprüchen angegeben. Besonders bevorzugte Ausführungsformen werden unter Bezugnahme auf Figuren beschrieben.

Der Stromableiter für Brennstoffzellenstapel umfasst eine Mehrzahl von Aussparungen (Perforationen), einen Rahmenbereich mit wenigstens einer Rippe, die sich in der Plattenebene nach außen erstreckt, und einen Innenbereich, der vom Rahmenbereich umgeben ist, wobei im Rahmenbereich wenigstens vier Aussparungen vorgesehen sind und wobei Aussparungen im Innenbereich eine Aussparungsstruktur definieren, die mit den Aussparungen im Rahmenbereich nicht zusammenhängt.

Wie die Kammer-Plattenelementen umfasst der Stromableiter Aussparungen im Rahmenbereich und im Innenbereich. Im Unterschied zu den Kammer-Plattenelementen hängen aber bei den Stromableitem die Aussparungen im Rahmenbereich und diejenigen im Innenbereich nicht zusammen. Beim Stapeln von Stromableitem und Kammer-Plattenelementen werden dadurch die ausgesparten Bereiche der Kammer-Plattenelemente, die einer Zufuhr von Fluid aus dem Rahmenbereich in den Innenbereich bzw. einer Abfuhr von Fluid aus dem Innenbereich in den Rahmenbereich dienen, durch die beiderseits vorgesehenen Stromableiter überbrückt, so dass an diesen Stellen eine Querschnittsverengung durch aufquellendes Membranmaterial verhindert wird. Dadurch können die erwünschten Strömungsverhältnisse aufrecht erhalten werden, ohne dass das Volumen des Stacks erhöht wird oder ein größerer Druck angelegt werden muss. Somit kann hat ein Brennstoffzellenstack, der unter Verwendung der Stromableiter aufgebaut ist, im Langzeitverhalten einen höheren Wirkungsgrad als ein Brennstoffzellenstack, der aus Stromableitern aufgebaut ist, bei denen die Aussparungsstruktur im Innenbereich mit den Aussparungen im Rahmenbereich zusammenhängt.

Die Rippe, die sich in der Plattenebene des Stromableiters nach außen erstreckt, erleichtert die Verschaltung der Stromableiter entlang der Stackachse (z-Achse).

Vorzugsweise definieren die Aussparungen im Innenbereich des Stromableiters eine zusammenhängende Aussparungsstruktur.

Bei einer zusammenhängenden Aussparungsstruktur ist die Gefahr des Auftretens von Staubereichen, an denen Fluid im Kontakt mit einer angrenzenden Membran nur unzureichend aufgefrischt wird, deutlich gegenüber isolierten Aussparungen verringert.

Diese zusammenhängende Aussparungsstruktur ist bevorzugt mäanderartig ausgebildet, so dass die Aussparungsstruktur des Stromleiters an diejenige des Kammer-Plattenelements angepasst werden kann. Der resultierende Kanal im Innenbereich begünstigt den Fluidtransport über die Fläche des Innenbereichs.

Alternativ kann auch eine Weiterbildung vorteilhaft sein, bei der die Aussparungen im Innenbereich eine nicht-zusammenhängende Aussparungsstruktur definieren. Hierbei kann es unter Umständen zwar zur Ausbildung von Bereichen kommen, an denen der Fluidtransport merklich verlangsamt ist, dafür ist es aber ohne gravierende Verringerung der Steifigkeit des Stromableiters möglich, die durch die Aussparungen eingenommene Fläche zu erhöhen, so dass ein möglichst großer Flächenbereich der angrenzenden Membranen in direktem Kontakt mit den Fluiden steht.

Beispielsweise kann eine solche Aussparungsstruktur gitterartig oder netzartig oder bienenwabenartig (hexagonal) ausgebildet sein. Speziell wird eine hexagonale Anordnungen von runden oder sechseckigen Aussparungen bevorzugt.

Vorzugsweise umfasst der Stromableiter ein Edelstahlblech mit einer wenigstens einseitigen Goldbeschichtung.

Edelstahl ist leicht bearbeitbar, preisgünstig, und sorgt für eine ausreichende Steifigkeit des Stromableiters. Allerdings hat Edelstahl einen vergleichsweise hohen Widerstand und ist daher für den Stromtransport wenig geeignet. Gold wird durch die verwendeten Fluide nicht korrodiert, hat einen der niedrigsten Widerstände unter allen Metallen, und kann gleichzeitig in sehr dünnen Schichten abgeschieden werden, so dass trotz des vergleichsweise hohen Goldpreises die Wirtschaftlichkeit dieser Stromableiter gewährleistet ist.

Unter Verwendung der Stromableiter und der bekannten Kammer-Plattenelemente können vorgefertigte Stackelemente zur Vereinfachung der Fertigung von Bipolarstacks oder Monopolarstacks bereitgestellt werden.

Das erfindungsgemäße Stackelement für Bipolarstacks umfasst ein Kammer-Plattenelement mit einer Mehrzahl von Aussparungen, einem Rahmenbereich, der einen Innenbereich umgibt, wobei vier Aussparungen im Rahmenbereich vorgesehen sind und Aussparungen im Innenbereich eine Aussparungsstruktur definieren, die mit zwei Aussparungen im Rahmenbereich zusammenhängt, sowie eine Stromableiterplatte.

Die Stromableiter und die Kammer-Plattenelemente können separat vorgefertigt sein, bevor das Stackelement zusammengebaut wird. Zur optimalen Ausrichtung der Aussparungen der Aussparungen im Stack werden aber möglichst viele Aussparungen durch Perforieren erst dann gebildet, nachdem die Platten miteinander verklebt oder anderweitig miteinander verbunden wurden.

Eine besonders bevorzugtes Verfahren zur Herstellung dieses Stackelements umfasst die Schritte des Perforierens einer Kammerrohplatte an wenigstens zwei vorgegebenen Bereichen zur Ausbildung von wenigstens zwei Aussparungen, Verklebens der wenigstens zweifach perforierten Kammerrohplatte mit einem Blech, und Perforierens der Kammerrohplatte und des Bleches an einer Mehrzahl von vorgegebenen Bereichen (im Rahmen- und im Innenbereich zur Ausbildung einer Mehrzahl von Aussparungen.

Zum Aufbau des Bipolarstacks werden zwei solche Stackelemente so aneinander gelagert, dass die Kammer-Plattenelemente, abgesehen von einer zwischengelagerten Trennwand, einander direkt gegenüberliegen. Dadurch werden die Anodenkammer und Kathodenkammer aneinandergrenzender Zellen gebildet.

Das erfindungsgemäße Stackelement für Monopolarstacks umfasst ein Kammer-Plattenelement mit einer Mehrzahl von Aussparungen, einem Rahmenbereich, der einen Innenbereich umgibt, wobei vier Aussparungen im Rahmenbereich vorgesehen sind und Aussparungen im Innenbereich eine Aussparungsstruktur definieren, die mit zwei Aussparungen im Rahmenbereich zusammenhängt, sowie zwei Stromableiterplatten.

Ein besonders bevorzugtes Verfahren zur Herstellung dieses Stackelements umfasst die Schritte des Perforierens einer Kammerrohplatte an wenigstens zwei vorgegebenen Bereichen zur Ausbildung von wenigstens zwei Aussparungen, beidseitigen Verklebens der wenigstens zweifach perforierten Kammerrohplatte mit zwei Blechen, und Perforierens der Kammerrohplatte und der beiden Bleche an einer Mehrzahl von vorgegebenen Bereichen zur Ausbildung einer Mehrzahl von Aussparungen.

Als Bleche bei den beiden oben beschriebenen Verfahren werden bevorzugt Edelstahlbleche verwendet, die zumindest auf einer Seite wenigstens teilweise mit Gold beschichtet sind, aber vor dem Verkleben mit der Kammerrohplatte noch keine Strukturierung in Form von Perforationen aufweisen.

Nachfolgend wird die Erfindung anhand besonders bevorzugter Ausbildungsformen unter Bezugnahme auf die beigefügten Figuren beschrieben.

Es zeigen:
- Fig. 1: die schematische Zellanordnung und Verschaltung bei einer monopolaren Bauweise;
- Fig. 2: die Ausbildung einer Fluidführungsplatte für eine Monopolaranordnung;
- Fig. 3: die Ausbildung einer Stromableiterplatte (verwendbar für Bipolar- und Monopolaranordnungen);
- Fig. 4: einen Dichtrahmen zur Verwendung zusammen mit der Stromableiterplatte von Fig. 3;
- Fig. 5: eine bevorzugte Ausführungsform einer Stromableiterplatte;
- Fig. 6: eine Explosionsdarstellung einer erfindungsgemäßen Monopolarstackeinheit unter der bekannten Fluidführungsplatte von Fig. 2 und der Stromableiterplatten von Fig. 5.
- Fig. 7: eine weitere bevorzugte Ausführungsform einer Stromableiterplatte;

Die Figuren 1 bis 3 wurden bereits einleitend beschrieben.

Die Erfinder haben bei Studien an monopolaren und bipolaren Brennstoffzellenstacks, die mit den Stackelementen der Figuren 2 und 3 gebildet sind, festgestellt, dass sich folienartige Membranen, die an den Stromabnehmern 3 anliegen, während des Betriebs verformen können und dabei lokal eine Querschnittsverengung der Strömungskanäle 23 bewirken können, was zu einem deutlich erhöhten Strömungswiderstand in Teilen der Stacks führt. Diese Querschnittsverengungen verringern somit die Leistungsdichte (Leistung pro Volumen) eines Stacks und somit seinen Wirkungsgrad. In besonders ungünstigen Fällen beeinträchtigen sie sogar die Funktionsfähigkeit eines Stacks.

Überraschenderweise wurde festgestellt, dass vor allem der Zuführbereich 24 zwischen den Aussparungen 22 im Rahmenbereich und der Aussparungsstruktur 23 im Innenbereich besonders anfällig gegenüber einer solchen Querschnittsverengung ist.

Diese Probleme konnten durch den in Fig. 4 skizzierten Dichtrahmen 4 deutlich verringert werden. Die Dichtrahmen 4 können wie die Stromabnehmer 3 aus dünnen Blechen hergestellt werden. Im Vergleich mit den Kammer-Plattenelementen 2 und den Stromabnehmern 3 ist der Dichtrahmen 4 im Innenbereich vollständig ausgespart.

Ein Monopolarstack mit einem solchen Dichtrahmen umfasst die folgende Stapelfolge:
..... - Kammer-Plattenelement 2 (Fig. 2) - Stromabnehmer 3 (Fig. 3) - Dichtrahmen 4 (Fig. 4) - Membran (nicht abgebildet) - Dichtrahmen 4 - Stromabnehmer 4 - Kammer-Plattenelement 2 - ....

Wie die Kammer-Plattenelemente 2 und die Stromabnehmer 3 haben die Dichtrahmen im Rahmenbereich vier Aussparungen zur Fluidführung entlang der Stackachse. Der Innenbereich ist dagegen vollständig ausgespart.

Der Dichtrahmen 4 wird also im Rahmenbereich zwischen dem Stromabnehmer 3 und der Membranfolie vorgesehen und überbrückt dabei den ausgesparten Bereich 34 im Stromabnehmer 3. Dadurch kann die Membran, die sich beispielsweise durch Aufquellen verformen kann, den Querschnitt der neuralgischen Bereiche 24 der Kammer-Plattenelemente nicht mehr verengen.

In einem Stack kommen aber auf jedes Kammer-Plattenelement 2 zwei solcher Dichtrahmen 4, was zu Mehrkosten aufgrund des zusätzlich benötigen Materials und des erhöhten Montageaufwands führt.

Daher wurde der Dichtrahmen 4 nicht als optimale Lösung des oben beschriebenen Problems angesehen und es wurden weitere Anstrengungen unternommen, um bessere Lösungen zu finden. Erfindungsgemäß wurde dies mit dem Stackelement gemäß Anspruch 1 erreicht.

Fig. 5 zeigt eine bevorzugte Ausführungsform des Stromabnehmers 103, der eine vereinfachte Stapelfolge ermöglicht:
..... - Kammer-Plattenelement 2 (Fig. 2) - Stromabnehmer 103 (Fig. 5) - Membran (nicht abgebildet) -Stromabnehmer 103 - Kammer-Plattenelement 2 - ......

Der Stromabnehmer 103 integriert die Funktionen (Stromführung und Abdichten) der oben erwähnten Stromabnehmer 3 (Fig. 3) und Dichtrahmen 4 (Fig. 4) in ein einziges Element, ohne dass die Dicke des Stromabnehmers 103 größer sein müsste, als die eines herkömmlichen Stromabnehmers 3 oder eines Dichtrahmens 4. Es werden durch Verwendung des Stromabnehmers also nicht nur der Montageaufwand und die Materialkosten verringert, sondern auch das Stackvolumen.

Der Stromabnehmer 103 kann wie der herkömmliche Stromabnehmer 3 von Fig. 3 für monopolare und bipolare Brennstoffzellenstacks verwendet werden. Da bipolare Kammer-Plattenelemente aber naturgemäß dicker als monopolare Kammer-Plattenelemente sind, ist die relative Volumenverringerung durch den Wegfall der nicht mehr benötigten Dichtrahmen 4, und damit die Erhöhung der Leistungsdichte, bei Monopolarstacks deutlich größer als bei Bipolarstacks.

Wie der Stromabnehmer 3 von Fig. 3 weist der Stromabnehmer 103 einen Rahmenbereich auf, wobei sich von zwei gegenüberliegenden Seiten des Rahmenbereichs nach außen (in der Plattenebene) Rippen erstrecken, die zur Verschaltung des Stacks dienen. Die Aussparungen im Innenbereich definieren bei der besonders bevorzugten Ausführungsform von Fig. 5 eine mäanderförmige Aussparungsstruktur 133, die aber im Unterschied zur Aussparungsstruktur 33 des Stromabnehmers 3, nicht mit den Aussparungen 132 im Rahmenbereich verbunden ist.

Der Stromabnehmer 103 ist so dimensioniert und geformt, dass die Aussparungen 131, 132, 133 mit den entsprechenden Aussparungen 21, 22, 23 der Kammer-Plattenelements 2 fluchten, wenn der Stromabnehmer 103 mit dem Kammer-Plattenelement 2 zur Deckung gebracht wird. Da aber die ausgesparten Bereiche 24 des Kammer-Plattenelements 2 keine Entsprechung bei den Stromabnehmern 3 haben, bewirken die Stromabnehmer an den Bereichen 24 eine Überbrückung, so dass aufquellendes oder sich anderweitig verformendes Membranmaterial den Kanalquerschnitt an diesen Stellen nicht verringern kann.

Im Unterschied zu einem herkömmlichen Stromabnehmer 3 kann die Perforierung von (unstrukturierten) Blechen zur Herstellung der Stromabnehmer (z.B. Stromabnehmer 103 von Fig. 5) nicht mehr gleichzeitig und in einem Arbeitsgang mit der Herstellung der Kammer-Plattenelemente 2 aus Rohplattenmaterial durchgeführt werden. Dieser Nachteil wird aber mehr als ausgeglichen dadurch, dass durch Verwendung der Stromabnehmer die Leistungsdichte des Stacks erhöht werden kann und, gegenüber dem Fall, dass Dichtrahmen 4 verwendet werden, der Montageaufwand verringert werden kann.

Die Herstellung der Stromabnehmer kann separat von der Herstellung der Kammerplattenelemente erfolgen, d.h. bevor diese Elemente miteinander verklebt werden.

Bei der bevorzugten Ausführungsform von Fig. 5 ist alternativ folgende Vorgehensweise möglich: das Rohplattenmaterial zur Herstellung der Kammer-Plattenelemente 2 wird zunächst nur an den beiden Bereichen 24 perforiert, die später die Verbindung zwischen den Aussparungen 22 im Rahmenbereich und der Aussparungsstruktur 23 im Innenbereich gewährleisten. Danach wird dieses an den zwei Stellen 23 perforierte Plattenmaterial auf der einen Seite oder auf beiden Seiten mit einem Blech oder zwei Blechen verklebt und der verklebte zweilagige Verbund (für Bipolarstacks) oder dreilagige Verbund (für Monopolarstacks) in die Endform gestanzt.

Die zweilagigen Anordnungen dienen als Stackelemente für Bipolarstacks. Dabei werden zwei Stackelemente zur Ausbildung einer Kathodenkammer und einer Anodenkammer zusammen mit einer zwischen den Stackelementen vorgesehenen Trennplatte so aneinandergelagert, dass sich die beiden Kammer-Plattenseiten (durch die Trennplatte getrennt) gegenüberliegen. Der dreilagige Verbund dient als Stackelement für Monopolarstacks und stellt Anoden- oder Kathodendoppelkammem (mit zugehörigen Stromabnehmern) dar.

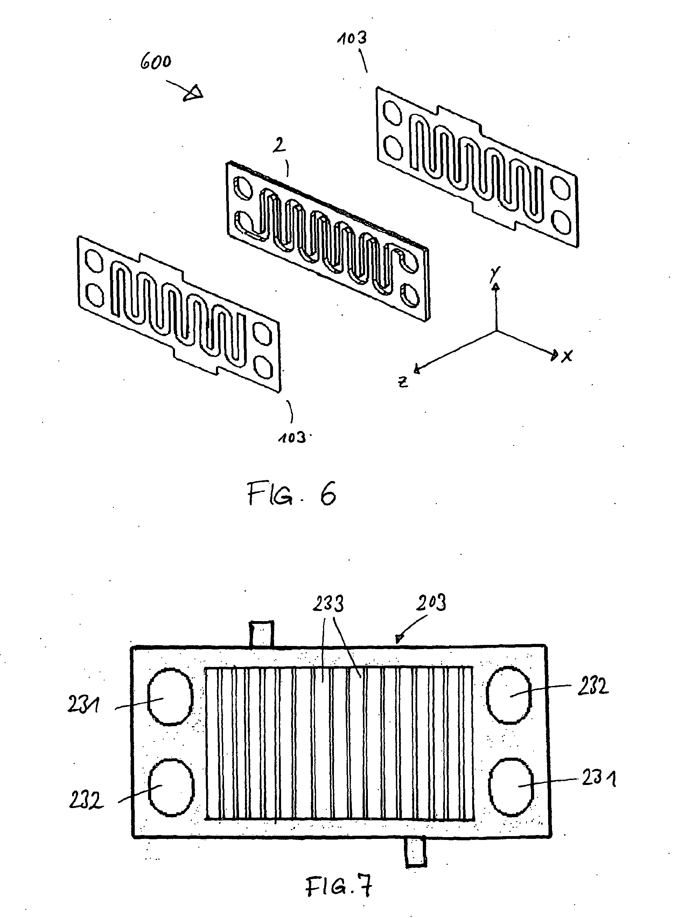

Fig. 6 zeigt ein solches dreilagiges Stackelement 600 für Monopolarstacks in Explosionsdarstellung. Nimmt man an, dass das Stackelement 600 in der gezeigten Orientierung eine Anodendoppelkammer bildet, so erhält man Kathodendoppelkammern dadurch, dass das Stackelement 600 um 180° um die x- oder y-Achse gedreht wird.

Die Aussparungsstruktur 23 der Kammer-Plattenelemente 2 dient der gleichmäßigen Fluidverteilung über die aktive Fläche und der Fluidführung zwischen den Zu- und Abführbohrungen 22. Die Aussparungsstruktur der Stromabnehmer muss dagegen eine möglichst große Kontaktfläche des Fluids mit der angrenzenden Membran bereitstellen und dabei gleichzeitig die Stromabführung aus dem aktiven Gebiet sicherstellen. Somit ist die identische Ausbildung der Aussparungsstrukturen 23 und 133 keineswegs zwingend. Vielmehr kann die Aussparungsstruktur des Stromabnehmers im Innenbereich jede beliebige Form aufweisen, solange die beiden oben angegebenen Maßgaben erfüllt sind und die Fluidverteilung nicht nachteilig beinflusst wird (z.B. durch lokale Bildung von Staubereichen, an denen das Fluid nicht mehr ausreichend schnell erneuert wird).

Fig. 7 zeigt eine weitere bevorzugte Ausführungsform des erfindungsgemäßen Stromabnehmers. Gleiche oder vergleichbare Strukturmerkmale sind wiederum mit einem um 100 gegenüber Fig. 5 erhöhten Bezugszeichen versehen.

Der Stromabnehmer 203 von Fig. 7 weist im Innenbereich eine gitterartige Aussparungsstruktur 233 auf, die wie die Aussparungsstruktur 133 des Stromabnehmers 103 nicht mit den Aussparungen 231, 232 im Rahmenbereich verbunden ist. Die einzelnen Aussparungen 233 hängen nicht miteinander zusammen, was dem Stromabnehmer 203 gegenüber dem Stromabnehmer 103 (und gegenüber dem Stromabnehmer 3) eine höhere mechanische Steifigkeit verleiht.

Neben den vertikalen Stegen, die in Fig. 7 die einzelnen Aussparungen 233 gegeneinander abgrenzen, können auch noch horizontale Stege vorgesehen sein, so dass sich eine netzartige Aussparungsstruktur mit rechteckigen oder quadratischen Aussparungen ergibt.

Eine weitere bevorzugte Aussparungsstruktur umfasst eine hexagonale (bienenwabenartige) Anordnung von runden oder sechseckigen Aussparungen.

Der Stromabnehmer 103 ist so dimensioniert und geformt, dass die Aussparungen 131, 132, 133 mit den entsprechenden Aussparungen 21, 22, 23 der Kammer-Plattenelements 2 fluchten, wenn der Stromabnehmer 103 mit dem Kammer-Plattenelement 2 zur Deckung gebracht wird. Da aber die ausgesparten Bereiche 24 des Kammer-Plattenelements 2 keine Entsprechung bei den Stromabnehmern 3 haben, bewirken die Stromabnehmer an den Bereichen 24 eine Überbrückung, so dass aufquellendes oder sich anderweitig verformendes Membranmaterial den Kanalquerschnitt an diesen Stellen nicht verringern kann.

Eine noch weitergehende Vereinfachung des Aufbaus eines Monopolarstacks kann durch Stackelemente (z.B. Laminate) erreicht werden, die aus einem isolierenden Kammer-Plattenelement 2 und zwei Stromabnehmern 103 oder 203 bestehen, die beidseitig des Kammer-Plattenelements 2 vorgesehen und fest mit diesem verbunden sind. Der Stack kann dann einfach als alternierende Anordnung aus Stackelementen und Elektrolyteinrichtungen (MEAs) aufgebaut werden.

## Patentansprüche

1. Ein Stackelement für Brennstoffzellenstacks, umfassend:
ein Kammer-Plattenelement (2) mit einer Mehrzahl von Aussparungen (21, 22, 23) des Kammer-Plattenelements (2) und einem Rahmenbereich des Kammer-Plattenelements (2), der einen Innenbereich des Kammer-Plattenelements (2) umgibt, wobei vier Aussparungen (21, 22) des Kammer-Plattenelements (2) im Rahmenbereich des Kammer-Plattenelements (2) vorgesehen sind und Aussparungen (23) des Kammer-Plattenelements (2) im Innenbereich des Kammer-Plattenelements (2) eine Aussparungsstruktur (23) des Kammer-Plattenelements (2) definieren, die mit zwei Aussparungen (22) des Kammer-Plattenelements (2) im Rahmenbereich des Kammer-Plattenelements (2) zusammenhängt, sowie
eine Stromableiterplatte (103, 203), umfassend:
eine Mehrzahl von Aussparungen (131, 132, 133; 231, 232, 233) der Stromableiterplatte (103, 203),
einen Rahmenbereich der Stromableiterplatte (103, 203) mit wenigstens einer Rippe, die sich in der Stromableiterplattenebene nach außen erstreckt, und einen Innenbereich der Stromableiterplatte (103, 203), der vom Rahmenbereich der Stromableiterplatte (103, 203) umgeben ist, wobei:
im Rahmenbereich der Stromableiterplatte (103, 203) wenigstens vier Aussparungen (131, 132; 231, 232) der Stromableiterplatte (103, 203) vorgesehen sind, und
Aussparungen (133; 233) der Stromableiterplatte (103, 203) im Innenbereich der Stromableiterplatte (103, 203) eine Aussparungsstruktur (133; 233) der Stromableiterplatte (103, 203) definieren, die mit den Aussparungen (131, 132; 231, 232) der Stromableiterplatte (103, 203) im Rahmenbereich der Stromableiterplatte (103, 203) nicht zusammenhängt.

2. Ein Stackelement für Brennstoffzellenstacks gemäß Anspruch 2, weiterhin umfassend:
eine weitere derartige Stromableiterplatte (103, 203).

3. Ein Stackelement für Brennstoffzellenstacks gemäß Anspruch 1 oder 2,
wobei die Aussparungen (133) im Innenbereich der Stromableiterplatte (103) bzw. der Stromableiterplatten (103) eine zusammenhängende Aussparungsstruktur (133) definieren.

4. Ein Stackelement für Brennstoffzellenstacks gemäß Anspruch 3, wobei die Aussparungsstruktur (133) mäanderartig ausgebildet ist.

5. Ein Stackelement für Brennstoffzellenstacks gemäß Anspruch 1 oder 2, wobei die Aussparungen (233) im Innenbereich der Stromableiterplatte (103) bzw. der Stromableiterplatten (103, 203) eine nicht-zusammenhängende Aussparungsstruktur (233) definieren.

6. Ein Stackelement für Brennstoffzellenstacks gemäß Anspruch 5, wobei die Aussparungsstruktur (233) gitterartig oder netzartig oder bienenwabenartig ausgebildet ist.

7. Ein Stackelement für Brennstoffzellenstacks gemäß einem der vorangegangenen Ansprüche, wobei die Stromableiterplatte (103) bzw. die Stromableiterplatten (103, 203) jeweils ein Edelstahlblech mit einer wenigstens einseitigen Goldbeschichtung umfassen.

8. Ein Verfahren zur Herstellung eines Stackelements gemäß Anspruch 1, mit den Schritten:
Perforieren einer Kammerrohplatte an wenigstens zwei vorgegebenen Bereichen zur Ausbildung von wenigstens zwei Aussparungen (24),
Verkleben der wenigstens zweifach perforierten Kammerrohplatte mit einem Blech,
Perforieren der Kammerrohplatte und des Bleches an einer Mehrzahl von vorgegebenen Bereichen zur Ausbildung einer Mehrzahl von Aussparungen (21, 22, 23, 31, 32, 33).

9. Ein Verfahren gemäß Anspruch 8 zur Herstellung eines Stackelements gemäß Anspruch 2, worin:
der Schritt des Verklebens ein Verkleben der wenigstens zweifach perforierten Kammerrohplatte mit einem weiteren Blech umfasst, wodurch die wenigstens zweifach perforierten Kammerrohplatte beidseitig mit zwei Blechen verklebt wird, und
der Schritt des Perforierens ein Perforieren der Kammerrohplatte und der beiden Bleche an einer Mehrzahl von vorgegebenen Bereichen zur Ausbildung einer Mehrzahl von Aussparungen (21, 22, 23, 31, 32, 33) umfasst.

## Claims

1. A stack element for fuel cell stacks, comprising:
a chamber-plate element (2) with a plurality of recesses (21,22,23) of the chamber-plate element (2) and a frame region of the chamber-plate element (2), which surrounds an inner region of the chamber-plate element (2), wherein four recesses (21,22) of the chamber-plate element (2) are provided in the frame region of the chamber-plate element (2) and recesses (23) of the chamber-plate element (2) define in the inner region of the chamber-plate element (2) a recess structure (23) of the chamber-plate element (2), which is coherent with two recesses (22) of the chamber-plate element (2) in the frame region of the chamber-plate element (2), as well as
a current diverter plate (103,203), comprising:
a plurality of recesses (131,132,133;231,232,233) of the current diverter plate (103,203),
a frame region of the current diverter plate (103,203) with at least one rib which extends in the plane of the current diverter plate, and an inner region of the current diverter plate (103,203) which is surrounded by the frame region of the current diverter plate (103,203), wherein:
in the frame region of the current diverter plate (103,203) there are provided at least four recesses (131,132;231,232) of the current diverter plate (103,203), and
recesses (133;233) of the current diverter plate (103,203) define in the inner region of the current diverter plate (103,203) a recess structure (133;233) of the current diverter plate (103,203), which is not coherent with the recesses (131,132;231,232) of the current diverter plate (103,203) in the frame region of the current diverter plate (103,203).

2. A stack element for fuel cell stacks according to Claim 2, further comprising:
a further such current diverter plate (103,203).

3. A stack element for a fuel cell stack according to Claim 1 or 2,
wherein the recesses (133) define, in the inner region of the current diverter plate (103) or of the current diverter plates (103), a coherent recess structure (133).

4. A stack element for fuel cell stacks according to Claim 3, wherein the recess structure (133) is of meandering configuration.

5. A stack element for fuel cell stacks according to Claim 1 or 2, wherein the recesses (233) define, in the inner region of the current diverter plate (103) or of the current diverter plates (103,203), a non-coherent recess structure (233).

6. A stack element for fuel cell stacks according to Claim 5, wherein the recess structure (233) is of lattice-like or net-like or honeycomb-like configuration.

7. A stack element for fuel cell stacks according to any one of the preceding Claims, wherein the current diverter plate (103) or the current diverter plates (103,203) each comprise a stainless steel sheet which is gold-plated on at least one side.

8. A method of producing a stack element according to Claim 1, with the steps of:
perforating a raw chamber-pate in at least two predetermined regions to form at least two recesses (24),
adhering the at least twice perforated raw chamber-pate to a sheet,
perforating the raw chamber-pate and the sheet in a plurality of predetermined regions to form a plurality of recesses (21,22,23,31,32,33).

9. A method according to Claim 8 for producing a stack element according to Claim 2, wherein:
the step of adhering comprises adhering the at least twice perforated raw chamber-pate to a further sheet, whereby the at least twice perforated raw chamber-pate is adhered on both sides to two sheets, and
the step of perforating comprises perforating the raw chamber-pate and the two sheets in a plurality of predetermined regions to form a plurality of recesses (21,22,23,31,32,33).

## Revendications

1. Elément d'empilement pour des empilements de piles à combustible comprenant :
un élément de plaque de chambre (2) avec une pluralité d'évidements (21, 22, 23) de l'élément de plaque de chambre (2) et une zone de cadre de l'élément de plaque de chambre (2) qui entoure une zone intérieure de l'élément de plaque de chambre (2), quatre évidements (21, 22) de l'élément de plaque de chambre (2) étant prévus dans la zone de cadre de l'élément de plaque de chambre (2) et des évidements (23) de l'élément de plaque de chambre (2) dans la zone intérieure de l'élément de plaque de chambre (2) définissant une structure d'évidement (23) de l'élément de plaque de chambre (2) qui est en relation avec deux évidements (22) de l'élément de plaque de chambre (2) dans la zone de cadre de l'élément de plaque de chambre (2), ainsi que
une plaque de dérivation (103, 203) comprenant :
une pluralité d'évidements (131, 132, 133 ; 231, 232, 233) de la plaque de dérivation (103, 203),
une zone de cadre de la plaque de dérivation (103, 203) avec au moins une nervure qui s'étend vers l'extérieur dans le plan de la plaque de dérivation, et une zone intérieure de la plaque de dérivation (103, 203) qui est entourée par la zone de cadre de la plaque de dérivation (103, 203), dans lequel :
dans la zone de cadre de la plaque de dérivation (103, 203) sont prévus au moins quatre évidements (131, 132 ; 231, 232) de la plaque de dérivation (103, 203), et
des évidements (133 ; 233) de la plaque de dérivation (103, 203) dans la zone intérieure de la plaque de dérivation (103, 203) définissent une structure d'évidement (133 ; 233) de la plaque de dérivation (103, 203) qui n'est pas en relation avec les évidements (131, 132 ; 231, 232) de la plaque de dérivation (103, 203) dans la zone de cadre de la plaque de dérivation (103, 203).

2. Elément d'empilement pour des empilements de piles à combustible selon la revendication 1, comprenant en outre une autre plaque de dérivation de la sorte (103, 203).

3. Elément d'empilement pour des empilements de piles à combustible selon la revendication 1 ou 2, dans lequel
les évidements (133) dans la zone intérieure de la plaque de dérivation (103) ou des plaques de dérivation (103) définissent une structure d'évidement (133) continue.

4. Elément d'empilement pour des empilements de piles à combustible selon la revendication 3, dans lequel la structure d'évidement (133) est réalisée comme des méandres.

5. Elément d'empilement pour des empilements de piles à combustible selon la revendication 1 ou 2, dans lequel les évidements (233) dans la zone intérieure de la plaque de dérivation (103) ou des plaques de dérivation (103, 203) définissent une structure d'évidement (233) non continue.

6. Elément d'empilement pour des empilements de piles à combustible selon la revendication 5, dans lequel la structure d'évidement (233) est réalisée comme un treillis ou un filet ou en nid d'abeilles.

7. Elément d'empilement pour des empilements de piles à combustible selon l'une quelconque des revendications précédentes, dans lequel la plaque de dérivation (103) ou les plaques de dérivation (103, 203) comprennent chacune une tôle en acier spécial avec un revêtement or au moins d'un côté.

8. Procédé de fabrication d'un élément d'empilement selon la revendication 1, présentant les étapes suivantes consistant à :
perforer une plaque brute de chambre sur au moins deux zones prescrites pour la réalisation d'au moins deux évidements (24),
coller la plaque brute de chambre perforée au moins doublement avec une tôle,
perforer la plaque brute de chambre et la tôle sur une pluralité de zones prescrites pour la réalisation d'une pluralité d'évidements (21, 22, 23, 31, 32, 33).

9. Procédé selon la revendication 8 de fabrication d'un élément d'empilement selon la revendication 2, dans lequel :
l'étape consistant à coller comprend un collage de la plaque brute de chambre perforée au moins doublement avec une autre tôle, grâce à quoi la plaque brute de chambre perforée au moins doublement est collée de part et d'autre avec deux tôles et
l'étape consistant à perforer comprend une perforation de la plaque brute de chambre et des deux tôles sur une pluralité de zones prescrites pour la réalisation d'une pluralité d'évidements (21, 22, 23, 31, 32, 33).
